# EUROPÄISCHE PATENTSCHRIFT

(11) **EP 2 388 056 B1**
(45) Veröffentlichungstag und Bekanntmachung des Hinweises auf die Patenterteilung: **24.10.2018**
(21) Anmeldenummer: 11165392.9
(22) Anmeldetag: 10.05.2011
(51) Int. Cl.: B01D 35/16, B01D 36/00, F02M 37/22

(54) **FLUIDFILTER**
FLUID FILTER
FILTRE À FLUIDE

(30) Priorität: 21.05.2010 DE 102010021252
(43) Veröffentlichungstag der Anmeldung: 23.11.2011
(73) Patentinhaber: MAHLE International GmbH, 70376 Stuttgart (DE)
(72) Erfinder: Moser, Erich Hanno, 9020, Klagenfurt (AT); Ramusch, Adolf Markus, 9400 Wolfsberg (AT); Rudolph, Thomas, 70374 Stuttgart (DE)
(74) Vertreter: BRP Renaud & Partner mbB Rechtsanwälte Patentanwälte Steuerberater

(56) Entgegenhaltungen:
- EP-A2- 0 106 737
- DE-B- 1 248 017
- US-A- 4 515 690
- US-A- 4 611 627

## Beschreibung

Die vorliegende Erfindung betrifft einen Fluidfilter, insbesondere einen Kraftstofffilter, mit einem Sammelraum, insbesondere mit einem Wassersammelraum zum Sammeln von abgeschiedenem Fluid, vorzugweise Wasser, und mit einer Ablassvorrichtung, beispielsweise einem Ablassventil oder einer Ablassschraube, zum Ablassen des abgeschiedenen Fluids, beispielsweise Wassers, gemäß dem Oberbegriff des Anspruchs 1. Die Erfindung betrifft außerdem ein Ablassventil für ein derartiges Fluidfilter.

Aus der DE 38 82 270 T2 ist ein Fluidfilter bekannt, welches ein Ablassventil und ein separat dazu angeordnetes Entlüftungsventil aufweist.

Aus der DE 12 48 017 B ist ein Kraftstofffilter mit einem Wassersammelraum und einer Ablassschraube zum Ablassen des abgeschiedenen Wassers bekannt. Ebenso vorgesehen ist eine Ablassvorrichtung zum Ablassen des abgeschiedenen Wassers. Die Ablassvorrichtung ermöglicht in geöffnetem Zustand einen Lufteinlass in den Wassersammelraum und besitzt zudem einen antennenartig ausgebildeten länglichen Fortsatz, der in den Sammelraum hineinragt und bei einem Öffnen der Ablassvorrichtung durch Bewegung eine Oberflächenspannung reduziert.

Aus der EP 0 106 737 A2 ist ein Kraftstofffilter mit einem Wassersammelraum zum Sammeln von abgeschiedenem Wasser und einem Ablassventil, das in geöffnetem Zustand einen Lufteinlass in den Wassersammelraum ermöglicht und zugleich durch seinen antennenartig ausgebildeten Fortsatz geeignet ist, die Oberflächenspannung des Wassers durch Bewegung beim Öffnen zu reduzieren.

Aus der US 4,515,690 A sowie aus der US 4,611,627 A sind weitere Fluidfilter mit entsprechenden Ablasseinrichtungen bekannt.

Kraftstoffe, insbesondere Dieselkraftstoffe, aber auch Öle, weisen stets einen nicht gänzlich eliminierbaren Anteil an Wasser auf, der jedoch vor dem Verbrennen in einem Verbrennungsmotor möglichst entfernt werden muss, um dadurch einerseits Korrosionsschäden im Verbrennungsmotor vermeiden zu können und andererseits eine effektive Verbrennung zu bewirken. Das Wasser wird dabei üblicherweise in Kraftstofffiltern und/oder Coalescern abgeschieden und in daran angeschlossenen Wassersammelräumen gesammelt. Das Ablassen des abgeschiedenen Wassern kann dabei entweder automatisch oder manuell erfolgen, wobei insbesondere die intermolekular wirkenden Kräfte des abgeschiedenen Wassers ein problemloses Ablassen oftmals erschweren. Die intermolekularen Kräfte basieren auf den elektrischen Anziehungskräften zwischen den Atomen und Molekülen, die bei einem Molekül innerhalb der Flüssigkeit gleichmäßig von allen Seiten einwirken, so dass sie sich dort gegenseitig aufheben. Bei einem Wassermolekül an einer Oberfläche fehlen diese Wechselwirkungspartner jedoch, so dass sich eine daraus resultierende Kraft ergibt, die senkrecht zur Oberfläche steht. Zum Überwinden dieser Kräfte muss eine entsprechende Arbeit verrichtet werden, zum Beispiel um ein Molekül aus der Oberfläche herauszulösen.

Die vorliegende Erfindung beschäftigt sich mit dem Problem, für ein Fluidfilter der gattungsgemäßen Art eine verbesserte Ausführungsform anzugeben, die insbesondere ein vereinfachtes, schnelles und problemloses Ablassen von abgeschiedenem Wasser ermöglicht.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, eine Oberflächenspannung von in einem Fluidfilter abzulassenden Fluid, insbesondere abgeschiedenem Fluid, insbesondere von Wasser zu reduzieren und dadurch dessen Austrag aus dem Fluidfilter zu erleichtern. Nachfolgend wird bei dem abzulassenden Fluid des vorzugsweise von Wasser gesprochen, da dies das am häufigsten abzulassende Fluid darstellt, wobei generell auch ein anderes Fluid abgeschieden und abgelassen werden kann. Nachfolgend wird in der gesamten Anmeldung von einem Wassersammelraum und bei dem abzulassenden Fluid von abzulassendem Wasser gesprochen, wobei dies nur der besseren Verständlichkeit halber erfolgt und selbstverständlich keine Beschränkung darstellen soll, so dass der Wassersammelraum nur als mögliches Beispiel eines Sammelraums und das Wasser nur als mögliches Beispiel von abzulassendem Fluid gesehen werden sollen. Das Fluidfilter, welches beispielsweise als Kraftstofffilter ausgebildet sein kann, weist dabei in bekannter Weise also einen Wassersammelraum zum Sammeln von aus dem Fluid, insbesondere aus dem Kraftstoff, abgeschiedenem Wasser auf, ebenso wie eine Ablassvorrichtung zum Ablassen des abgeschiedenen Wassers. Die Ablassvorrichtung ist dabei erfindungsgemäß in der Lage, in geöffnetem Zustand einen Lufteinlass in den Sammelraum/Wassersammelraum zu ermöglichen und weist zudem an dem in den Wassersammelraum ragenden Ende einen antennenartigen länglich ausgebildeten Fortsatz, z.B. in Form einer Lanze oder eines Pfeiles auf, der sich beim Öffnen der Ablassvorrichtung bewegt, beispielsweise dreht und verstellt und dadurch die Oberflächenspannung des Wassers reduziert. Die Reduzierung der Oberflächenspannung erfolgt dabei durch eine Verformung, zum Beispiel eine Dehnung der Oberfläche und/oder eine Einleitung einer Scherkraft durch ein Verdrehen des Fortsatzes, welche das Ablassen des abgeschiedenen Wassers vereinfacht. Der Fortsatz dringt dabei in das Volumen des abgeschiedenen Wassers ein oder befindet sich in diesem und reduziert dessen Oberflächenspannung, wobei unter dem Begriff "Fortsatz" selbstverständlich sämtliche Körper, wie beispielsweise auch Pins, Pieker, etc. subsummiert sein sollen, mit welchen eine Vergrößerung der Oberfläche des Wassers und damit eine Reduzierung der Oberflächenspannung des Wassers erreicht werden kann. Ein derartig ausgebildeter Fortsatz, welcher beispielsweise einen Axialfortsatz (vorzugsweise gerade oder gebogen) eines Ventilkolbens der Ablassvorrichtung bildet, lässt sich fertigungstechnisch und konstruktiv einfach und damit wirtschaftlich herstellen, wobei der dadurch zu erzielende Effekt positiv ein Abflussverhalten des abgeschiedenen Wassers beeinflusst. Der Fortsatz kann dabei einen sich zum freien Ende hin verjüngenden Querschnitt aufweisen, der vorzugsweise rund, verdreht oder beispielsweise auch sternförmig ausgebildet ist. Die Form des Fortsatzes kann je nach Bedarf beliebig gewählt werden. Der Fortsatz kann auch auf vorhandene, bzw. bereits hergestellte Ablassvorrichtungen nachträglich aufgebracht werden. Dieser Fortsatz kann aus hartem oder flexiblem Material hergestellt werden. Insbesondere bei einem Herausziehen des Fortsatzes aus dem abgeschiedenen Wasser entsteht durch einen Kapillareffekt an demselben eine Störung der Oberflächenspannung, der ein schnelles Ablassen begünstigt.

Erfindungsgemäß weist die Ablassvorrichtung einen Ventilkolben mit einem zweiten Außengewinde auf, der in ein an einem Gehäuse der Ablassvorrichtung angeordnetes zweites Innengewinde einschraubbar ist. Zugleich weist dieses Gehäuse einen Ventilsitz auf, in welchem der Ventilkolben mit einem Ventilabschnitt durch eine Drehbewegung desselben translatorisch verstellbar ist. Genau diese Drehbewegung, die auch beim Öffnen der Ablassvorrichtung erfolgt begünstigt zusammen mit einem Herausziehen die Reduzierung der Oberflächenspannung. Der antennenartig ausgebildete längliche Fortsatz ist dabei vorzugsweise stirnseitig am Ventilabschnitt des Ventilkolbens angeordnet oder einstückig mit diesem ausgebildet. Durch ein Verdrehen des Ventilkolbens relativ zum Gehäuse des Ablassventils erfolgt somit ein translatorisches Verstellen des Ventilabschnitts innerhalb des Ventilsitzes, wobei bei einer weiteren Drehbewegung des Ventilkolbens der Ventilabschnitt aus dem Ventilsitz herausgezogen und dadurch das Ablassventil geöffnet wird. Eine Abdichtung des Ventilabschnittes im hohlzylinderartig ausgebildeten Ventilsitz des Gehäuses erfolgt dabei üblicherweise über eine erste O-Ringdichtung. Sowohl der Ventilkolben als auch das zugehörige Gehäuse mit dem Ventilsitz können dabei vorzugsweise als Kunststoffteil ausgebildet werden, wobei theoretisch denkbar ist, dass der antennenartig ausgebildete längliche Fortsatz an die Stirnseite des Ventilabschnitts des Ventilkolbens angeformt und insbesondere einstückig mit dem Ventilkolben ausgebildet ist. Die Ablassvorrichtung weist auch ein Gehäuse mit einem ersten Außengewinde auf, über welches es in ein an einer Wandung des Sammelraum/Wassersammelraums angeordnetes erstes Innengewinde einschraubbar ist.

Erfindungsgemäß ist eine Axialerstreckung des gehäuseseitigen Ventilsitzes kleiner als eine Axialerstreckung eines zweiten Außengewindes, über welches der Ventilkolben mit dem Gehäuse verschraubt ist, so dass das Ablassventil vollständig geöffnet ist, das heißt, dass der Ventilabschnitt des Ventilkolbens vollständig aus dem Ventilsitz herausgefahren ist, um einen maximal möglichen Hub zur Reduzierung der Oberflächenspannung aufzubringen, bevor der Ventilkolben ganz aus dem Gehäuse des Ablassventils entnommen werden kann. Hierdurch kann gewährleistet werden, dass ein Ablassen des abgeschiedenen Wassers ermöglicht wird, ohne dass der Ventilkolben komplett aus dem zugehörigen Gehäuse entfernt werden muss. Die beiden Außengewinde sind dabei gleichgerichtet, beispielsweise beide rechtsgängig, wobei die beiden Außengewinde unterschiedlich schwergängig ausgebildet sind. Das zweite Außengewinde ist dabei zugleich leichtgängiger als das erste Außengewinde. Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch eine mögliche Ausführungsform eines erfindungsgemäßen Fluidfilters,
- Fig. 2: eine Schnittdarstellung des erfindungsgemäßen Ablassventils,
- Fig. 3: eine Ansicht eines Ventilkolbens des Ablassventils,
- Fig. 4: eine weitere mögliche Ausführungsform eines erfindungsgemäßen antennenartig ausgebildeten Ablassventils.

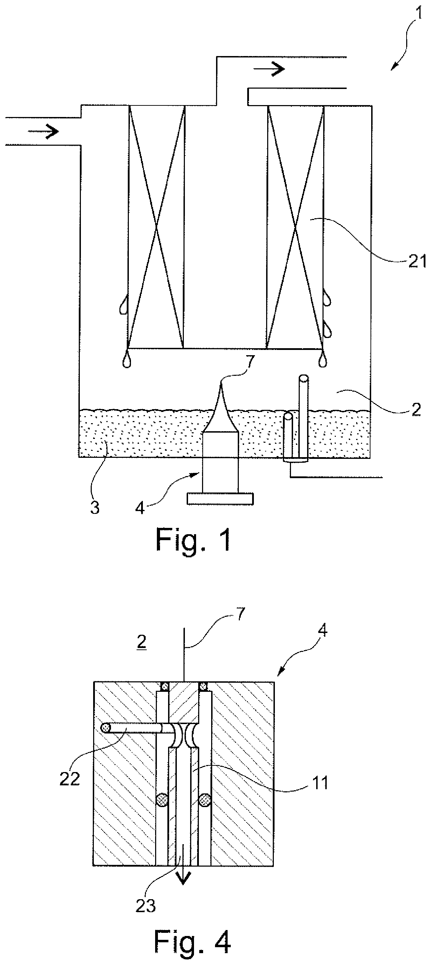

Entsprechend der Fig. 1, weist ein erfindungsgemäßes Fluidfilter 1, welches beispielsweise im konkreten Fall als Kraftstofffilter ausgebildet ist, einen Sammelraum 2, hier einen Wassersammelraum 2 zum Sammeln von aus dem Fluid abgeschiedenem Wasser 3 auf. In der Figurenbeschreibung wird dabei stets von Wassersammelraum 2 gesprochen, wobei selbstverständlich denkbar ist, dass dieser auch als gewöhnlicher Sammelraum 2 ausgebildet sein kann und in diesem generell ein Fluid - also nicht unbedingt Wasser 3 - gesammelt wird. Ein Fluidfilter 1, in dem eine Ablassvorrichtung 4, insbesondere ein Ablassventil oder eine Ablassschraube, angeordnet ist, muss nicht zwingend einen Sammelraum 2 aufweisen, es kann sich auch um ein Fluidfilter 1 handeln, bei dem z.B. um das das Fluid filternde Filterelement 21 zu wechseln das Fluid abgelassen werden muss. Es ist auch denkbar die Ablassvorrichtung 4 in anderen Fluidbehältern in einem Fahrzeug vorzusehen. Selbstverständlich kann das Fluidfilter 1 auch als Harnstofffilter oder als Ölfilter ausgebildet sein.

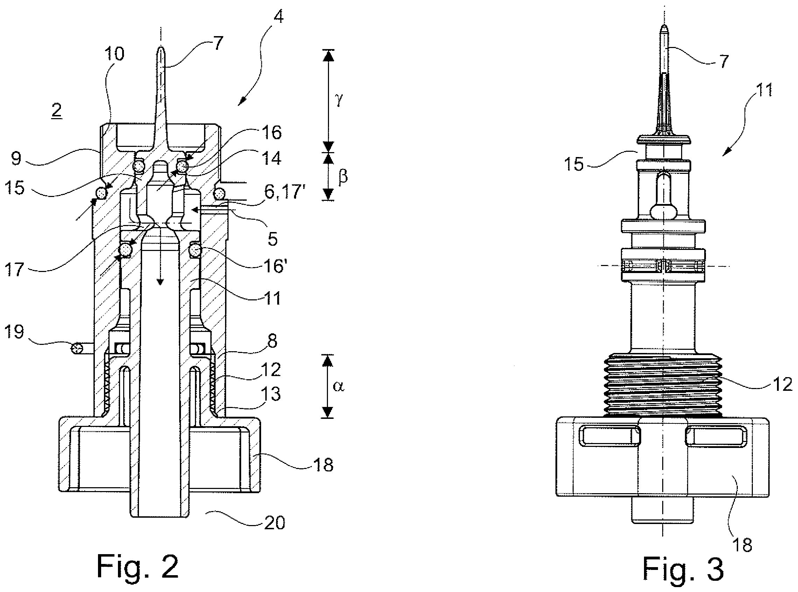

Das in Fig. 1 dargestellte Fluidfilter 1 weist den Wassersammelraum 2 auf der Rohseite auf und das Filterelement 21 wird von außen nach innen vom zu reinigenden Fluid durchströmt. Selbstverständlich kann es auch andersherum durchströmt werden, bzw. der Wassersammelraum 2 kann sich auch auf der Reinseite des Filterelementes 21 befinden. Bevorzugt in Bodennähe bzw. bodenseitig des Wassersammelraums 2 ist die Ablassvorrichtung 4 angeordnet, mit welchem das abgeschiedene Wasser 3 aus dem Wassersammelraum 2 abgelassen werden kann. Erfindungsgemäß ermöglicht die Ablassvorrichtung 4 in geöffnetem Zustand einen Einlass von Luft 5 über einen entsprechenden Lufteinlass 6 (vgl. Fig. 2) und besitzt darüber hinaus einen antennenartig ausgebildeten länglichen Fortsatz 7, der in den Wassersammelraum 2 und damit in das Wasser 3 hineinragt und die Oberflächenspannung des Wassers 3 reduziert, sofern er bewegt wird. Durch den in den Wassersammelraum 2 hineinragenden und sich beim Öffnen drehenden bzw. bewegenden Fortsatz 7 wird eine Oberfläche des Wassers 3 vergrößert und dadurch die Oberflächenspannung zwischen sich an der Oberfläche des Wassers 3 und im Inneren des Wassers 3 befindlichen Kräfte der Wassermolekülen reduziert. Die Reduzierung der Spannung des Wassers 3 ermöglicht ein einfaches und schnelles Ablassen des abgeschiedenen Wassers 3 aus dem Wassersammelraum 2.

Die Ablassvorrichtung 4 weist gemäß der Fig. 2 ein Gehäuse 8 mit einem ersten Außengewinde 9 auf, über welches es in einer an einer Wandung des Wassersammelraums 2 angeordnetes erstes Innengewinde 10 einschraubbar ist. Darüber hinaus weist die Ablassvorrichtung 4 einen Ventilkolben 11 mit einem zweiten Außengewinde 12 auf, der in ein am Gehäuse 8 angeordnetes zweites Innengewinde 13 einschraubbar ist. Das Gehäuse 8 kann auch Teil des Filtergehäuses des Fluidfilters 1 direkt sein. Statt eines Außengewindes 12 kann das Gehäuse 8 der Ablassvorrichtung 4 in das Filtergehäuse des Fluidfilters 1 eingeklebt, bzw. eingeschweißt sein. Auch das Innengewinde 13 ist nicht unbedingt notwendig, dadurch kann die Ablassvorrichtung 4 noch leichter bedient werden. Allerdings muss sichergestellt sein, dass während des Betriebs beispielsweise mittels eines Sicherungselementes die Ablassvorrichtung 4 den Sammelraum 2 dicht verschließt (nicht gezeigt). Dann muss zur Entleerung des Sammelraumes 2 nur das Sicherungselement entfernt werden und die Ablassvorrichtung 4 gibt die Ablauföffnung frei.

Betrachtet man die Fig. 2, so kann man erkennen, dass das Gehäuse 8 einen Ventilsitz 14 besitzt, in welchem der Ventilkolben 11 mit einem Ventilabschnitt 15 durch eine Drehbewegung translatorisch verstellbar ist. Der antennenartig ausgebildete längliche Fortsatz 7 ist dabei stirnseitig am Ventilabschnitt 15 des Ventilkolbens 11 angeordnet. Zur Abdichtung zwischen dem Ventilabschnitt 15 und dem Ventilsitz 14 ist eine erste O-Ringdichtung 16 vorgesehen, wogegen eine zweite O-Ringdichtung 16' am Ventilkolben 11 angeordnet ist, und diesen gegenüber dem zylinderartig ausgeformten Gehäuse 8 abdichtet.

Um ein zuverlässiges Ablassen des Wassers 3 aus dem Wassersammelraum 2 zu ermöglichen, ohne dass der Ventilkolben 11 gänzlich aus dem Gehäuse 8 herausgedreht wird, ist eine Axialstreckung β des Ventilsitzes 14 kleiner als eine Axialerstreckung α des zweiten Außengewindes 12. Darüber hinaus ist eine Axialerstreckung γ des Fortsatzes 7 vorzugsweise zumindest doppelt so groß, vorzugsweise dreimal so groß, wie die Axialerstreckung β des Ventilsitzes 14. Wichtig hierbei ist allgemein nur, dass ein genügend großer Weg zur Bewegung des Fortsatzes 7 und damit zur Störung und Reduzierung der Oberflächenspannung des Wassers 3 zur Verfügung gestellt werden kann.

Der Ventilkolben 11 ist vorzugsweise als einseitig geschlossenes Rohr (Kanal) ausgebildet mit zumindest einer Radialöffnung 17, die zwischen der ersten O-Ringdichtung 16 und der zweiten O-Ringdichtung 16' liegt. Im Gehäuse 8 ist darüber hinaus eine Radialöffnung 17' als Lufteinlassöffnung vorgesehen.

Generell kann durch die Herabsetzung der Oberflächenspannung des Wassers 3 durch den erfindungsgemäßen Fortsatz 7 ein vereinfachtes Ablassen des Wassers 3 aus dem Wassersammelraum 2 erreicht werden, wobei hierfür ursächlich eine Herabsetzung der Oberflächenspannung an einer Grenzfläche sowie im Inneren des Wassers 3 ist. Selbstverständlich muss dabei der Fortsatz 7 nicht die gemäß den Fig. 1 und 2 gezeigte Ausführungsform aufweisen, sondern kann generell als Brechungskopf ausgebildet sein. Klar ist auch, dass der Fortsatz 7 keine Spitze aufweisen muss, um die Oberflächenspannung herabzusetzen. Die Bewegung des Fortsatzes 7 ist dabei entscheidend für die Störung der Oberfläche und damit die Reduzierung der Oberflächenspannung, wobei der Fortsatz 7 generell auch eine unregelmäßige Geometrie aufweisen kann. Auch kann der Lufteinlass 6 nicht nur eine runde, sondern nahezu eine beliebige Form aufweisen. Beispielsweise kann sich der Fortsatz 7 zu seinem freien Ende hin verjüngen und einen sternförmigen Querschnitt aufweisen.

An dem dem Fortsatz 7 abgewandten Ende besitzt der Ventilkolben eine Kragenkontur 18, über welche ein griffiges Festhalten und Drehen des Ventilkolbens 11 ermöglicht wird. Die Kragenkontur 18 kann dabei vorzugsweise in der Form eines Außensechskants ausgebildet sein oder aber auch sternförmig. Mögliche Abmessungen für den Fortsatz 7 sind γ ca. 21mm bei einem Durchmesser von ca. 1,5mm. Die Fertigung des Ventilkolbens 11 und/oder des Gehäuses 8 sind dabei aus Kunststoff oder Metall denkbar.

Generell erfolgt durch ein Ausschrauben des Ventilkolbens 11 aus der Ablassvorrichtung 4 eine Rotation des Fortsatzes 7 an der Oberfläche des abgeschiedenen Wassers 3, wodurch dessen Oberflächenspannung reduziert wird. Durch die Rotation und den gleichzeitigen Hub des Fortsatzes 7 erfolgt eine Vergrößerung der Oberfläche durch Adhäsionskräfte am Brechungskopf des Fortsatzes 7 und dadurch ein erleichtertes Abfließen des Wassers 3.

Exemplarisch kann die Ablassvorrichtung 4 auch die in Fig. 2 dargestellte Form aufweisen. Dabei ist in eine den Ventilkolben 11 umgebende Wandung ein Gaseinlasskanal 22, respektive ein Lufteinlass 6, und in den Ventilkolben 11 ein Fluidauslasskanal 23 eingeformt.

## Patentansprüche

1. Fluidfilter (1), insbesondere ein Kraftstofffilter, mit einem Sammelraum, insbesondere mit einem Wassersammelraum (2) zum Sammeln von abgeschiedenem Fluid/Wasser (3), und mit einer Ablassvorrichtung (4), beispielsweise einem Ablassventil oder einer Ablassschraube, zum Ablassen des abgeschiedenen Fluids/Wassers (3), wobei die Ablassvorrichtung (4) in geöffnetem Zustand einen Lufteinlass (6) in den Sammelraum/Wassersammelraum (2) ermöglicht und einen antennenartig ausgebildeten länglichen Fortsatz (7) aufweist, der in den Sammelraum/Wassersammelraum (2) hineinragt und bei einem Öffnen der Ablassvorrichtung (4) durch Bewegung eine Oberflächenspannung des Fluids/Wassers (3) reduziert,
**dadurch gekennzeichnet,**
- **dass** die Ablassvorrichtung (4) ein Gehäuse (8) mit einem ersten Außengewinde (9) aufweist, über welches es in ein an einer Wandung des Sammelraum/Wassersammelraums (2) angeordnetes erstes Innengewinde (10) einschraubbar ist,
- **dass** die Ablassvorrichtung (4) einen Ventilkolben (11) mit einem zweiten Außengewinde (12) aufweist, der in ein am Gehäuse (8) angeordnetes zweites Innengewinde (13) einschraubbar ist,
- **dass** die beiden Außengewinde (9,12) gleichgerichtet und unterschiedlich schwergängig ausgebildet sind, wobei das zweite Außengewinde (12) leichtgängiger als das erste Außengewinde (9) ist,
- **dass** das Gehäuse (8) einen Ventilsitz (14) aufweist, in welchem der Ventilkolben (11) mit einem Ventilabschnitt (15) durch eine Drehbewegung translatorisch verstellbar ist, wobei der Fortsatz (7) am Ventilabschnitt (15) angeordnet und eine Axialerstreckung β des gehäuseseitigen Ventilsitzes (14) kleiner als eine Axialerstreckung α des zweiten Außengewindes (12) ist.

2. Fluidfilter nach Anspruch 1,
**dadurch gekennzeichnet,**
**dass** der Ventilkolben (11) in seinem Ventilabschnitt (15) eine erste O-Ringdichtung (16) trägt, über die er gegen den zugehörigen gehäuseseitigen Ventilsitz (14) abgedichtet ist.

3. Fluidfilter nach einem der Ansprüche 1 oder 2,
**dadurch gekennzeichnet,**
**dass** der Ventilkolben (11) im Bereich seines Kolbenschaftes eine zweite O-Ringdichtung (16') trägt, über die er gegen das Gehäuse (8) abgedichtet ist.

4. Fluidfilter nach Anspruch 2 oder 3,
**dadurch gekennzeichnet,**
**dass** der Ventilkolben (11) als einseitig geschlossenes Rohr ausgebildet ist und zumindest eine Radialöffnung (17) aufweist, die zwischen der ersten und der zweiten O-Ringdichtung (16,16') liegt.

5. Fluidfilter nach einem der Ansprüche 1 bis 4,
**dadurch gekennzeichnet,**
- **dass** eine Axialerstreckung (γ) des Fortsatzes (7) zumindest doppelt so groß ist als die Axialerstreckung (β) des Ventilsitzes (14), und/oder
- **dass** im zylinderartig ausgeformten Gehäuse (8) eine Radialöffnung (17') als Lufteinlass (6) vorgesehen ist.

## Claims

1. Fluid filter (1), in particular a fuel filter, having a collection chamber, in particular having a water collection chamber (2) for collecting discharged fluid/water (3), and having a draining device (4), for example a draining valve or a draining screw, for draining the discharged fluid/water (3), wherein the draining device (4) in opened state facilitates an air inlet (6) into the collection chamber/water collection chamber (2) and has an antenna-like formed long continuation (7) which protrudes into the collection chamber/water collection chamber (2) and at an opening of the draining device (4) reduces through movement a surface tension of the fluid/water (3),
**characterised in**
- **that** the draining device (4) has a housing (8) with a first outer thread (9) by means of which it can be screwed in to a first inner thread (10) disposed at a wall of the collection chamber/water collection chamber (2),
- **that** the draining device (4) has a valve piston (11) having a second outer thread (12) which can be screwed into a second inner thread (13) disposed at the housing (8),
- **that** the two outer threads (9, 12) are formed co-directional and of different stiffness, wherein the second outer thread (12) is less stiff than the first outer thread (9),
- **that** the housing (8) has a valve seat (14) in which the valve piston (11) with one valve section (15) is translationally adjustable by means of a rotational movement, wherein the continuation (7) disposed at the valve section (15) and an axial extension β of the housing side valve seat (14) is smaller than an axial extension α of the second outer thread (12).

2. Fluid filter according to claim 1,
**characterised in**
**that** the valve piston (11) bears in its valve section (15) a first O-ring seal (16), via which it is sealed against the associated housing side valve seat (14).

3. Fluid filter according to one of claims 1 or 2,
**characterised in**
**that** the valve piston (11) bears in the region of its piston shaft a second O-ring seal (16'), via which it is sealed against the housing (8).

4. Fluid filter according to claim 2 or 3,
**characterised in**
**that** the valve piston (11) is formed as one-sided closed tube and has at least one radial opening (17), which lies between the first and the second O-ring seal (16, 16').

5. Fluid filter according to one of claims 1 to 4,
**characterised in**
- **that** an axial extension (γ) of the continuation (7) is at least twice as great as the axial extension (β) of the valve seat (14), and/or
- **that** in the cylinder-like formed housing (8) is provided a radial opening (17') as air inlet (6).

## Revendications

1. Filtre à fluide (1), en particulier un filtre à carburant, avec un espace collecteur, en particulier avec un espace collecteur d'eau (2) destiné à collecter du fluide/eau séparé (3), et avec un dispositif de décharge (4), par exemple une soupape de décharge ou une vis de décharge, destiné à évacuer le fluide/eau séparé (3), lequel dispositif de décharge (4) permet à l'état ouvert une entrée d'air (6) dans l'espace collecteur ou espace collecteur d'eau (2) et présente un prolongement allongé (7) réalisé comme une antenne, qui dépasse dans l'espace collecteur ou espace collecteur d'eau (2) et qui réduit par mouvement une tension superficielle du fluide/eau (3) lors d'une ouverture du dispositif de décharge (4),
**caractérisé en ce que**
- le dispositif de décharge (4) comporte un corps (8) avec un premier filetage externe (9) par l'intermédiaire duquel il peut être vissé dans un premier filetage interne (10) agencé au niveau d'une paroi de l'espace collecteur ou espace collecteur d'eau (2),
- le dispositif de décharge (4) comporte un piston de soupape (11) avec un deuxième filetage externe (12) qui peut être vissé dans un deuxième filetage interne (13) agencé au niveau du corps (8),
- les deux filetages externes (9, 12) sont réalisés dirigés dans le même sens et avec un ajustage différent, le deuxième filetage externe (12) étant plus facile à manier que le premier filetage externe (9),
- le corps (8) comporte un siège de soupape (14) dans lequel le piston de soupape (11) est réglable en translation avec un tronçon de soupape (15) par un mouvement de rotation, le prolongement (7) étant agencé au niveau du tronçon de soupape (15) et une extension axiale β du siège de soupape côté corps (14) étant inférieure à une extension axiale α du deuxième filetage externe (12).

2. Filtre à fluide selon la revendication 1, **caractérisé en ce que** le piston de soupape (11) porte dans son tronçon de soupape (15) un premier joint torique d'étanchéité (16) par l'intermédiaire duquel il est étanchéifié par rapport au siège de soupape côté corps (14) associé.

3. Filtre à fluide selon l'une quelconque des revendications 1 ou 2, **caractérisé en ce que** le piston de soupape (11) porte dans la zone de sa tige de soupape un deuxième joint torique d'étanchéité (16') par l'intermédiaire duquel il est étanchéifié par rapport au corps (8).

4. Filtre à fluide selon la revendication 2 ou 3, **caractérisé en ce que** le piston de soupape (11) est réalisé sous forme de tube fermé d'un côté et comporte au moins une ouverture radiale (17) qui se trouve entre le premier et le deuxième joint torique d'étanchéité (16, 16').

5. Filtre à fluide selon l'une quelconque des revendications 1 à 4, **caractérisé en ce que**
- une extension axiale (γ) du prolongement (7) est égale au moins au double de l'extension axiale (β) du siège de soupape (14), et/ou
- une ouverture radiale (17') est prévue comme entrée d'air (6) dans le corps (8) de forme cylindrique.
